# DEMANDE DE BREVET EUROPEEN

(11) **EP 4 663 556 A1**
(43) Date de publication de la demande: **17.12.2025**
(21) Numéro de dépôt: 25182642.6
(22) Date de dépôt: 13.06.2025
(51) Int. Cl.: B64G 1/10, B64G 1/22, B64G 1/44, B64G 1/64, B64G 4/00

(54) **PLATEFORME SPATIALE ET PROCÉDÉ DE DÉPLOIEMENT D'UNE TELLE PLATEFORME**

(30) Priorité: 13.06.2024 FR 2406263
(71) Demandeur: THALES, 92190 Meudon (FR)
(72) Inventeur: DURAND, Gautier, 06150 CANNES LA BOCCA (FR)
(74) Mandataire: Lavoix

(57) **Abrégé**

La présente invention concerne une plateforme spatiale (10) formée d'une pluralité de modules spatiaux (20) identiques assemblés entre eux pour former une structure allongée selon un axe de plateforme (X), ladite structure présentant une distribution de masses sensiblement homogène suivant l'axe de plateforme (X).

## Description

La présente invention concerne une plateforme spatiale formée d'une pluralité de modules spatiaux et un procédé de déploiement d'une telle plateforme.

L'invention s'inscrit dans le domaine des larges structures orbitales, utilisables dans des buts différents.

L'art antérieur connu dans le domaine de telles structures orbitales repose principalement sur des architectures fonctionnelles de type ISS (« *International Space Station* » en anglais ou « *Station Spatiale Internationale* » en français).

Dans un tel type d'architecture, les différents sous-systèmes la composant sont assemblés sur une structure porteuse. L'attitude de cette structure est généralement contrôlée par des actionneurs de type CMG (de l'anglais « *Control Momentum Gyroscope* ») ou de type roue à réaction qui ont l'inconvénient de représenter une masse importante, ou alors par des propulseurs qui présentent l'inconvénient de consommer des ergols.

Ce type d'architecture présente donc rapidement des limites lorsque les dimensions deviennent importantes, de l'ordre de plusieurs centaines de mètres. Ces limites s'expriment notamment en termes de contrôlabilité ainsi qu'en termes de masse.

Plus particulièrement, l'architecture de type ISS présente une architecture fonctionnelle et centralisée qui présente des inconvénients d'optimisation de masse et de la distance entre les différentes fonctions. Cela engendre alors des pertes par exemple de la dissipation thermique sur les chaines de puissance. Ce type d'architecture présente également des difficultés du contrôle en attitude dues principalement à des flexions importantes liées aux grandes dimensions exposées au flux solaire.

De ce fait, les architectures existantes ne peuvent pas être utilisées lorsqu'il est nécessaire d'accroitre ces dimensions pour pouvoir assurer des fonctions non assurées actuellement.

La présente invention a pour but de remédier à ces inconvénients et de proposer une solution permettant d'accroitre facilement les dimensions d'une plateforme spatiale tout en assurant sa contrôlabilité en attitude.

A cet effet, l'invention a pour objectif une plateforme spatiale formée d'une pluralité de modules spatiaux identiques assemblés entre eux pour former une structure allongée selon un axe de plateforme, ladite structure présentant une distribution de masses sensiblement homogène suivant l'axe de plateforme.

Suivant d'autres aspects avantageux de l'invention, la plateforme comprend une ou plusieurs caractéristiques suivantes, prises isolément ou suivant toutes les combinaisons techniquement possibles :
- chaque module spatial comprend une charge utile et est autosuffisant en énergie et en dissipation de la chaleur ;
- chaque module est déployable indépendamment des autres modules ;
- chaque module comprend une pluralité de panneaux solaires formant un premier plan du module correspondant;
   les modules étant assemblés de sorte que leur premiers plans forment un plan utile de la plateforme ;
- la plateforme étant destinée à être mise sur une orbite de sorte que son plan utile est orienté en permanence vers le Soleil ;
- la plateforme étant destinée à être mise sur une orbite de sorte que l'axe de plateforme est orienté avec le nadir de la Terre ;
- la plateforme présentant une structure en « I » ;
- la plateforme comprenant en outre un robot apte à se déplacer sur une surface de la plateforme et configuré pour déployer des éléments formant chaque module et/ou pour effectuer des opérations de maintenance de la plateforme ;
- la plateforme comprenant en outre une masse apte à se déplacer sur une surface de la plateforme et configurée pour contrôler l'attitude de la plateforme selon au moins un axe ;
- ladite masse est configurée pour contrôler l'attitude de la plateforme au moins en lacet ;
- ladite masse est un robot ;
- la plateforme comprenant au moins un actionneur/propulseur fixe ou déplaçable par un robot ;
- ladite structure présente une distribution de masses sensiblement homogène dans un plan utile formé de l'axe de plateforme et d'un axe perpendiculaire à cet axe de plateforme.

L'invention a également pour objectif un procédé de déploiement d'une plateforme spatiale telle que définie précédemment, comprenant les étapes suivantes :
- déploiement de chaque module spatial constituant la plateforme ;
- assemblage des modules spatiaux entre eux.

L'invention a également pour objectif un module spatial destiné à être déployé dans l'espace pour former une plateforme spatiale, le module spatial étant formé d'un nombre prédéterminé d'éléments ayant tous une même forme plate dans un plan d'extension de l'élément correspondant, chaque élément étant d'un type prédéterminé, au moins un élément formant une charge utile.

Suivant d'autres aspects avantageux de l'invention, le module comprend une ou plusieurs caractéristiques suivantes, prises isolément ou suivant toutes les combinaisons techniquement possibles :
- le type de chaque élément est choisi dans le groupe comprenant :
   - panneau solaire ;
   - radiateur ;
   - charge utile ;
- le module comprenant une pluralité de panneaux solaires disposés autour de la charge utile dans un premier plan ;
   de préférence, le premier plan étant destiné à être orienté vers le Soleil ;
- le module comprenant une pluralité de radiateurs disposés dans un deuxième plan perpendiculaire au premier plan ;
   de préférence, le deuxième plan étant destiné à être aligné avec le nadir de la Terre ;
- les radiateurs sont disposés sensiblement en regard de la charge utile et à l'écart de celle-ci ;
- ladite forme plate est apte à être inscrite dans un cercle présentant une section transversale d'un compartiment de chargement d'un lanceur spatial ;
- ladite forme plate présente des dimensions identiques pour tous les éléments ;
- la charge utile comprend un serveur de stockage et traitement de données et des moyens de communication de ces données avec un autre module spatial de la même plateforme spatiale et/ou avec une station de communication externe ;
- la charge utile comprend en outre une pompe à chaleur pour dissiper de la chaleur ;
- chaque panneau solaire comprend un cadre et un voile tendu sur ce cadre et présentant des cellules solaires imprimées ;
   de préférence, le cadre étant fait en carbone-époxy ;
   de préférence, le voile étant fait en polyétheréthercétone (PEEK) ;
- au moins certains des éléments sont reliés par des interfaces de connexion, des charnières et/ou par des ressorts ;
- le module étant dépourvu de dispositif de stockage d'énergie.

L'invention a également pour objectif une plateforme spatiale comprenant une pluralité de modules tels que décrits ci-dessus, les modules étant assemblés entre eux.

L'invention a également pour objectif un procédé de pilotage d'une plateforme spatiale allongée selon un axe de plateforme, le procédé comprenant une phase de contrôle actif de l'attitude de la plateforme par déplacement d'une masse sur une surface de contrôle de la plateforme, la surface de contrôle s'étendant selon l'axe de plateforme.

Suivant d'autres aspects avantageux de l'invention, le procédé comprend une ou plusieurs caractéristiques suivantes, prises isolément ou suivant toutes les combinaisons techniquement possibles :
- le contrôle actif de l'attitude s'effectue par rapport à un seul axe ;
- le contrôle actif de l'attitude est un contrôle en lacet ;
- le procédé comprenant en outre une phase de contrôle passif de l'attitude par le gradient de la Terre ;
- le contrôle passif de l'attitude est un contrôle en tangage et/ou en roulis ;
- le contrôle actif de l'attitude de la plateforme s'effectue en outre par actionnement d'un ou de plusieurs actionneurs/propulseur ;
- ladite masse est un robot de déploiement et/ou de maintenance ;
- le procédé comprenant en outre un déplacement d'un ou de plusieurs actionneurs/propulseur par le robot ;
- la surface de contrôle présente une surface sensiblement plate s'étendant sur toute la longueur de la plateforme.

L'invention a également pour objectif un système de pilotage d'une plateforme spatiale, comprenant des moyens techniques permettant de mettre en oeuvre le procédé tel que défini ci-dessus.

L'invention apparaitra plus clairement à la lecture de la description qui va suivre, donnée uniquement à titre d'exemple non limitatif, et faite en référence aux dessins annexés sur lesquels :
- [Fig. 1] la figure 1 est une vue schématique de plusieurs positions d'une plateforme spatiale selon l'invention par rapport à la Terre ;
- [Fig. 2] la figure 2 est une vue schématique détaillée de face (partie A) et de côté (partie B) de la plateforme spatiale de la figure 1, la plateforme spatiale comprenant une pluralité de modules spatiaux ;
- [Fig. 3] la figure 3 est une vue détaillée de face (partie A) et de côté (partie A) de l'un des modules spatiaux de la figure 2 ;
- [Fig. 4] la figure 4 est une vue schématique illustrant un exemple de composition du module spatial de la figure 3 ;
- [Fig. 5] [Fig. 6] [Fig. 7] les figures 5 à 7 sont différentes vues illustrant la mise en oeuvre d'un procédé de déploiement du module spatial de la figure 3 selon différents modes de réalisation de l'invention ;
- [Fig. 8] la figure 8 est un organigramme d'un procédé de pilotage de la plateforme spatiale de la figure 2.

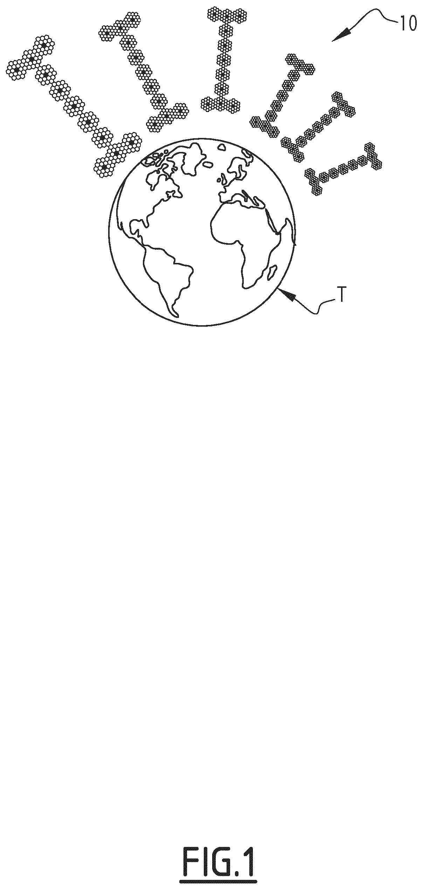

On a en effet illustré sur la figure 1 plusieurs positions d'une plateforme spatiale 10 selon l'invention.

Ces exemples illustrent notamment le positionnement de la plateforme spatiale 10 par rapport à la terre T.

Ainsi, comme cela est illustré sur cette figure, la plateforme spatiale 10 est destinée à être positionnée sur une orbite terrestre de sorte qu'au moins l'une des surfaces de cette plateforme, appelée par la suite surface utile, soit exposée en permanence au Soleil. Un exemple d'une telle orbite est une orbite SSO 6-18 heures à 1400 km d'altitude.

Cette plateforme 10 est par exemple destinée à former un serveur global de stockage et traitement de données dans l'espace, appelé également en anglais « *data center* »*.*

Pour ce faire, la plateforme 10 est apte à communiquer avec des moyens de communication terrestres pour recevoir et transmettre des données comme cela sera expliqué plus en détail par la suite. Cette communication peut se faire dans certains exemples via des moyens de communication intermédiaires, comme une constellation relai entre la plateforme 10 et la Terre. Cette solution permet de minimiser les infrastructures nécessaires au sol et de pouvoir atteindre directement les utilisateurs finaux (terminaux mobiles par exemple).

En variante, la plateforme spatiale 10 présente toute autre application spatiale nécessitant l'utilisation des structures de grandes dimensions dans l'espace. Dans certains exemples, la plateforme spatiale 10 peut présenter plusieurs applications combinées au sein d'une même structure.

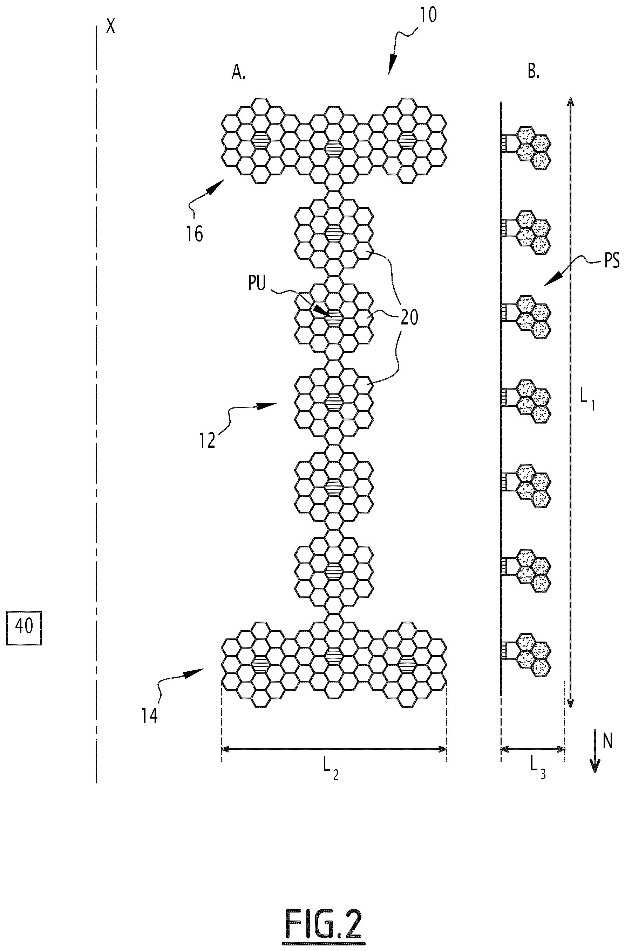

La plateforme spatiale 10 est illustrée plus en détail sur la figure 2.

En référence à cette figure 2, la plateforme 10 s'étend selon un axe de plateforme X qui est aligné selon la direction nadir N de la terre T.

Plus particulièrement, comme cela est visible sur la partie A de la figure 2 illustrant de face la plateforme spatiale 10, cette plateforme présente une structure en I. Autrement dit, la structure de la plateforme spatiale 10 présente une partie principale 12 s'étendant selon l'axe de plateforme X et deux parties secondaires 14, 16 s'étendant perpendiculairement à l'axe de plateforme X et positionnées à chaque extrémité de la partie principale 12. Il est à noter que l'axe X tel que représenté dans la figure 2 n'est qu'une représentation parmi plusieurs possibles, ainsi tout autre axe parallèle à l'axe X représenté est concevable, notamment un axe X de plateforme passant par le centre des modules 20 formant la partie principale 12.

En outre, les parties secondaires 14, 16 sont positionnées de manière symétrique par rapport à un plan traversant la partie principale 12 au centre et s'étendant selon l'axe de plateforme X.

À titre d'exemple, la plateforme spatiale 10 présente une étendue L1 selon l'axe de plateforme X comprise entre 200 et 300 m, de préférence sensiblement égale à 210 m. Également à titre d'exemple, la plateforme spatiale 10 présente une étendue perpendiculaire L2 à l'axe de plateforme X qui est comprise entre 60 et 90 m, par exemple sensiblement égale à 80 m.

La plateforme spatiale 10 forme une structure plate. Également à titre d'exemple, l'étendue L3 présentant l'épaisseur de cette plateforme est comprise entre 10 et 20 m et par exemple sensiblement égale à 11 m.

Bien entendu, d'autres dimensions sont également envisageables pour cette plateforme 10. En outre, comme cela sera expliqué plus en détail par la suite, ces dimensions peuvent être modifiées au cours de l'exploitation de la plateforme 10 pour ajout et/ou suppression de modules spatiaux.

De manière générale, le ratio entre l'épaisseur (c'est-à-dire l'étendue L3) de cette plateforme 10 et son étendue axiale (c'est-à-dire l'étendue L1) et compris entre 1/100 et 1/10.

La plateforme spatiale 10 est formée d'une pluralité de modules spatiaux identiques 20. Ces modules 20 sont assemblés entre eux pour former la structure de la plateforme telle qu'illustrée sur la figure 2. Par exemple, la partie principale 12 de la plateforme spatiale 10 est formée de cinq modules spatiaux 20 alignés alors selon l'axe de plateforme X. Chacune des parties secondaires 14, 16 est formée de trois modules spatiaux 20 alignés alors selon des axes perpendiculaires à l'axe de plateforme X.

Les modules spatiaux 20 présentent également sensiblement une même masse de sorte que la plateforme 10 présente une distribution de masses sensiblement homogène suivant l'axe de plateforme X et avantageusement, dans un plan utile PU tel que défini ci-dessous. Par « sensiblement homogène », on entend ici une distribution de masses homogène à l'échelle des modules spatiaux 20, i.e. en considérant ces modules spatiaux 20 au sein de la plateforme 10 en tant que des points de masse. De préférence, lorsque la plateforme forme une structure en I allongée selon un axe de plateforme (X), ledit axe de plateforme est colinéaire à la branche principale du I (c'est-à-dire qu'il passe par exemple par le centre des 7 modules spatiaux 20 alignés dans la partie A de la figure 2). Dans ce cas, les masses prises en compte dans la distribution de masses sensiblement homogène correspondent aux masses des modules spatiaux 20 présents sur cette branche principale du I.

Les modules spatiaux 20 sont interconnectés entre eux pour former une structure sensiblement rigide de la plateforme 10. La manière de connexion peut comprendre un clipsage de différentes parties formant ces modules spatiaux 20 ou alors le serrage ou alors le vissage, comme cela sera expliqué plus en détail par la suite.

Avantageusement, les modules spatiaux 20 sont interconnectés uniquement structurellement.

Alternativement, les modules spatiaux 20 sont également interconnectés par des câbles électriques et/ou par des câbles d'échange de données.

Avantageusement, chaque module spatial 20 est autosuffisant en énergie et en dissipation de la chaleur. Autrement dit, chaque module spatial 20 présente une autonomie par rapport aux autres modules au sein de la même plateforme 10.

Dans certains cas, les modules spatiaux 20 peuvent être interconnectés entre eux par des moyens de liaison sans fil afin d'échanger des données entre eux.

Encore avantageusement, les différents modules spatiaux 20 peuvent être ajoutés, enlevés et/ou remplacés de manière autonome, après la mise en orbite de la plateforme spatiale 10. Autrement dit, ces opérations n'affectent pas le fonctionnement des autres modules spatiaux 20.

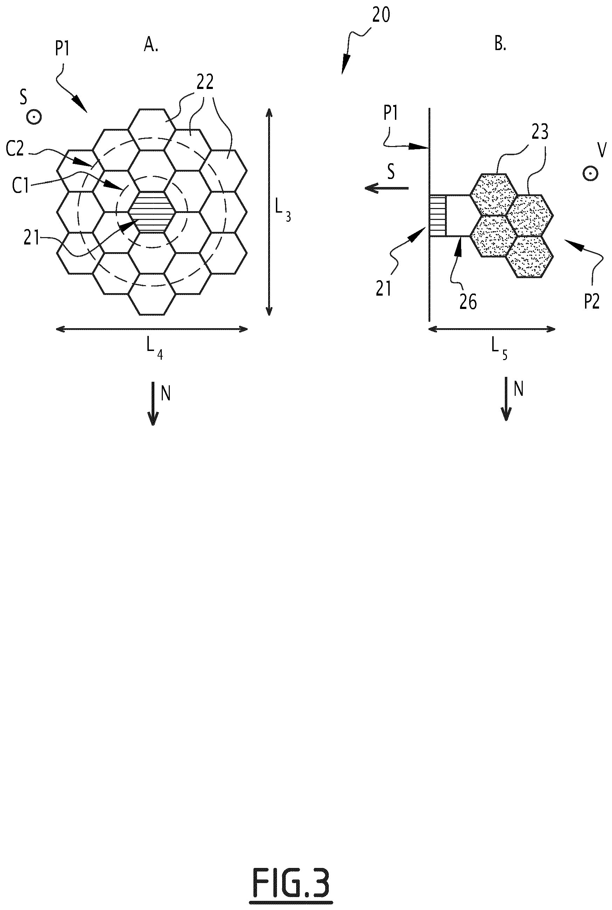

Un exemple d'un module spatial 20 est illustré plus en détail sur la figure 3.

En référence à cette figure 3, le module spatial 20 est formé d'un nombre prédéterminé d'éléments 21, 22, 23 assemblés entre eux pour former un premier plan P1 visible lorsque le module 20 est vu de face (partie A de la figure 3) et un deuxième plan P2 visible lorsque le module spatial 20 est vu de côté (partie B de la figure 3). Le deuxième plan P2 est perpendiculaire au premier plan P1.

Lorsque les modules spatiaux 20 sont assemblés au sein de la plateforme spatiale 10, leurs premiers plans P1 forment un plan unique appelé également plan utile PU. Ce plan utile correspond alors à la surface utile de la plateforme spatiale 10 telle que décrite précédemment. En particulier, le plan utile PU formé des plans P1 est orienté en permanence vers le Soleil.

En ce qui concerne les deuxièmes plans P2, comme cela est illustré sur la figure 3, ceux appartenant aux modules spatiaux 20 de la partie principale 12 et aux modules spatiaux 20 disposés au centre des parties secondaires 14, 16, forment également un même plan qui est perpendiculaire au plan utile PU. Ce plan est appelé par la suite plan secondaire PS. Le plan secondaire PS reste en permanence alors à l'ombre du plan utile PU. Les deuxièmes plans P2 des modules spatiaux 20 appartenant aux extrémités des parties secondaires 14, 16 forment quant à eux des plans parallèles au plan secondaire PS. Ces plans parallèles restent également à l'ombre du plan utile PU.

En revenant à la description de la figure 3, le module spatial 20 comprend un nombre prédéterminé d'éléments ayant tous une même forme plate dans le premier plan P1.

Chaque élément 21, 22, 23 est d'un type prédéterminé. Autrement dit, le module spatial 20 comprend uniquement des éléments dont chaque type est prédéterminé. Avantageusement, le type de chaque élément est choisi parmi trois types prédéterminés, à savoir un panneau solaire, un radiateur et une charge utile.

Dans l'exemple de la figure 3, l'élément 21 disposé au centre du premier plan P1 forme une charge utile. Les éléments 22 disposés autour de la charge utile 21 forment des panneaux solaires 22. Enfin, les éléments 23 disposés dans le deuxième plan P2 forment des radiateurs.

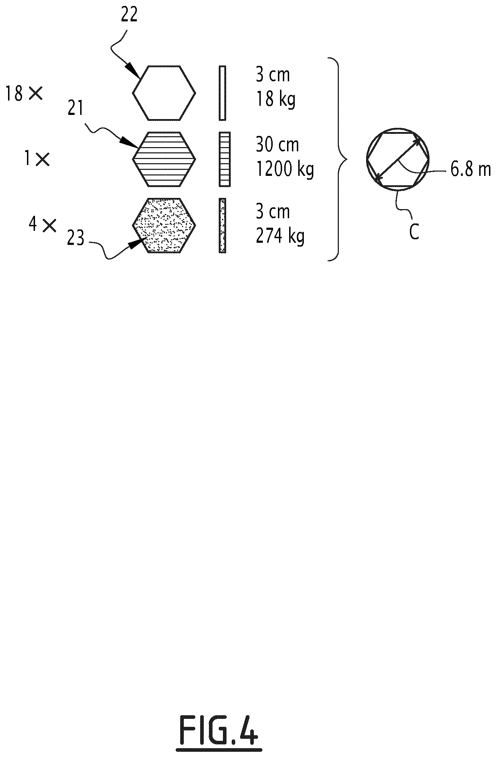

En référence à la figure 4, à titre d'exemple, le module spatial 20 peut comprendre une charge utile unique 21, dix-huit panneaux solaires 22 et quatre radiateurs 23.

Les éléments 21, 22, 23 du module spatial 20 forment tous une même forme qui est par exemple la forme hexagonale.

Plus généralement, ces éléments 21, 22, 23 présentent une forme pouvant être inscrite dans un cercle C représentant une section transversale d'un compartiment de chargement d'un lanceur spatial, tel que la coiffe de ce lanceur.

Avantageusement, cette forme est adaptée pour être inscrite de manière optimale dans ce cercle C tout en ayant des faces rectilignes permettant la fixation de ces éléments aux autres éléments. De préférence, chaque élément 21, 22, 23 présente une forme d'un polygone régulier avec un nombre n de côtés supérieur ou égal à 5. Avantageusement, le nombre n de côtés est égal à 6. Cette forme facilite l'assemblage des éléments entre eux pour former un module spatial et l'assemblage des modules entre eux pour former la plateforme 10.

De plus, les éléments 21, 22, 23 peuvent présenter tous les mêmes dimensions dans le premier plan P1. Autrement dit, seule l'épaisseur de ces éléments peut varier.

Avantageusement, les éléments d'un même type présentent une même épaisseur comme cela est illustré sur la figure 4. En particulier, les panneaux solaires 22 et les radiateurs 23 peuvent présenter une épaisseur sensiblement égale à 3 cm alors que la charge utile 21 peut présenter une épaisseur sensiblement égale à 30 cm.

La charge utile 21 présente par exemple un boitier comprenant une pluralité de composants électroniques.

Les composants électroniques sont notamment choisis en fonction de l'application donnée à la plateforme spatiale 10.

Par exemple, les composants électroniques comprennent un serveur de stockage de données et des moyens de communication. Ces moyens de communication présentent par exemple des moyens de communication locale avec la charge utile des autres modules spatiaux 20 ou alors des moyens de communication externe par exemple avec une station terrestre ou toute autre station de communication externe telle qu'un satellite.

La charge utile 21 comprend avantageusement une pompe à chaleur permettant de dissiper la chaleur cumulée dans le boitier formant la charge utile 21.

Dans certains exemples de réalisation, la charge utile 21 peut comprendre tout autre élément mettant en œuvre le fonctionnement du module spatial 10 ou alors de la plateforme spatiale 10.

Les panneaux solaires 22 sont disposés autour de la charge utile 21 comme cela est illustré sur la figure 3. En particulier, les panneaux solaires 22 peuvent former deux cercles C1, C2 autour de la charge utile 21. Le premier cercle C1 formant un cercle intérieur peut être constitué de six panneaux solaires 22 et le deuxième cercle C2 formant un cercle extérieur peut être constitué de douze panneaux solaires 22.

Chaque panneau solaire 22 comprend un cadre fait par exemple en carbone époxy et un voile tendu sur le cadre et fait par exemple en polyétheréthercétone (PEEK).

Le cadre peut présenter un profil de forme prédéterminé (par exemple en « H ») permettant par exemple de guider des câbles d'alimentation électrique à la périphérie de chaque panneau solaire. Le cadre peut également présenter des moyens de fixation aux autres éléments du même module spatial 20 ou d'un autre module spatial 20, c'est-à-dire aux autres panneaux solaires et/ou éventuellement à la charge utile 21. Les moyens de fixation peuvent comprendre des moyens de clipsage (utilisant par exemple des systèmes par baïonnette), de vissage ou alors des charnières.

Le voile tendu sur le cadre présente avantageusement des cellules solaires ou forme un support pour ces cellules, par exemple imprimées sur celui-ci.

Ces cellules solaires peuvent être de type prédéterminé (par exemple de type Perovskite) permettant de générer de l'énergie électrique selon des méthodes connues en soi. Les cellules solaires sont raccordées par les câbles guidés par le cadre structurel avec les autres panneaux solaires afin d'alimenter la charge utile 21. Dans certains cas, la charge utile 21 comprend en outre un transformateur de puissance permettant de transformer l'énergie électrique délivrée par les panneaux solaires 22 en une énergie électrique utilisable pour alimenter les différents composants électriques de cette charge utile 21. Par exemple, ce transformateur de puissance peut transformer la puissance de 400 V à 48 V.

Le cadre des panneaux solaires 22 permet de tendre le voile avec une tension souhaitée par exemple par un système de tringlerie, de poulies et de câbles, éventuellement de manière passive en jouant sur la dilatation différentielle des matériaux pour générer l'effort de tension. Avantageusement, les voiles peuvent être détendus pendant le lancement du lanceur pour ne pas être endommagés par les ondes acoustiques lors du lancement.

Les voiles tendus dans le cadre des panneaux solaires 22 forment avantageusement le premier plan P1 du module spatial 20, tel que décrit précédemment.

Les radiateurs 23 sont disposés dans le deuxième plan P2 avantageusement à l'écart de la charge utile 21.

En outre, ces radiateurs 23 sont disposés en regard de la charge utile 21 pour pouvoir conduire de la chaleur générée par cette charge utile. Pour écarter les radiateurs 23 de la charge utile 21, un cadre d'espacement 26 peut être utilisé.

La disposition des radiateurs 23 dans le deuxième plan P2 aligné avec la direction nadir N de la Terre et perpendiculaire au premier plan P1 permet de minimiser l'exposition de ces radiateurs 23 au flux infrarouge terrestre. Par ailleurs, l'espacement des radiateurs 23 de la charge utile 21 permet de minimiser l'irradiation infra-rouge par la charge utile 21. Cela permet alors d'assurer leur fonctionnement optimal.

En référence à la figure 3, le module spatial 20 présente dans le premier plan P1 une première étendue L3 alignée avec l'axe de plateforme X et une deuxième étendue L4 perpendiculaire à cet axe. Chacune de ces étendues est comprise par exemple entre 20 et 30 m. Avantageusement, la première étendue L3 est sensiblement égale à 29 m et la deuxième étendue L4 est avantageusement égale à 27 m.

Par ailleurs, le module spatial 20 présente également une épaisseur L5 qui est comprise par exemple entre 10 et 20 m et est égale par exemple sensiblement à 11 m. Autrement dit, l'épaisseur L5 du module spatial 20 forme l'épaisseur de la plateforme spatiale 10.

La figure 4 donne également des masses approximatives des différents éléments formant le module spatial 20.

Ainsi, dans l'exemple de la figure 4, la masse de la charge utile 21 peut être sensiblement égale à 1200 kg, la masse de chaque panneau solaire 22 peut être avantageusement égale à 18 kg et la masse de chaque radiateur 23 peut être sensiblement égale à 274 kg.

Les différents éléments du module spatial 20 sont avantageusement configurés pour être empilés les uns sur les autres dans le lanceur spatial et puis être déployés dans l'espace. Ainsi, les éléments constituant les modules spatiaux 20 de la plateforme spatiale 10 peuvent être empilés les uns sur les autres de sorte que la pile puisse être embarquée dans un même porteur et ensuite être déployée dans l'espace.

Avantageusement, les éléments les plus lourds tels que la charge utile 21 sont empilés d'abord (en position basse). Ensuite, les éléments moins lourds tels que les radiateurs 23 sont empilés au-dessus et ensuite les éléments les moins lourds tels que les panneaux solaires 22 sont empilés au-dessus afin de minimiser la flexion de l'empilement lors du lancement et donc faciliter le pilotage du lanceur.

De manière générale, la manière d'empilement dépend de la manière de déploiement de ces différents éléments dans l'espace.

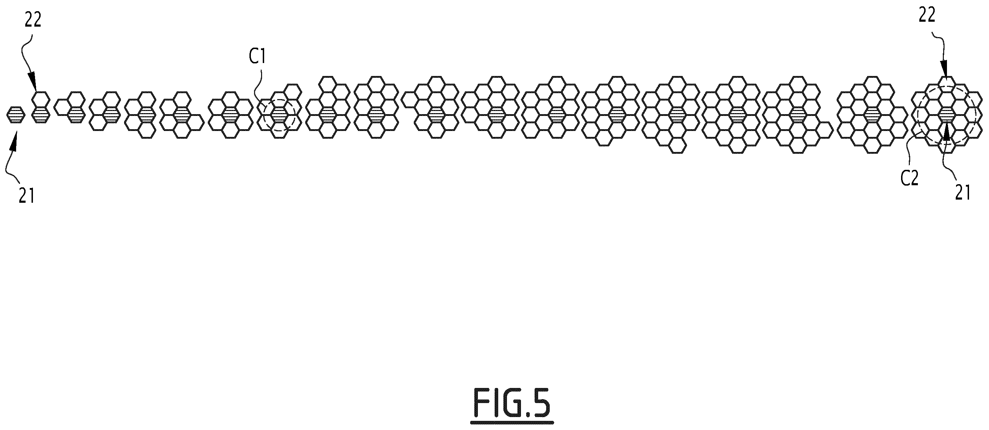

Par la suite, un procédé de déploiement des modules spatiaux 20 sera décrit en référence aux figures 5 à 7 présentant différents modes de réalisation de ce procédé de déploiement.

Selon un premier mode de réalisation, tous les éléments ou au moins la charge utile 21 et les panneaux solaires 22 sont enchainés entre eux pour être déployés en spirale comme cela est illustré sur la figure 5.

En particulier, selon ce mode de réalisation, la charge utile 21 constitue le premier élément de la pile qui est alors positionné au début du procédé de déploiement.

La charge utile 21 peut être raccordée à l'un des panneaux solaires 22 adjacents, par exemple par des charnières ou des ressorts.

Ainsi, la pile constituée des panneaux solaires 22 peut être tournée pour positionner ce premier panneau solaire 22 de manière adjacente à la charge utile 21. Le déploiement des panneaux solaires 22 peut ainsi être continué en spirale en formant d'abord le premier cercle C1 autour de la charge utile 21 et ensuite le deuxième cercle C2 autour de cette charge utile 21.

Par ailleurs, lors du déploiement, les éléments adjacents peuvent être raccordés entre eux par exemple par clipsage ou par vissage ou par serrage ou par tout autre moyen de fixation possible.

Ce type de déploiement peut par exemple être effectué de manière autonome par le module spatial 20 lui-même en utilisant des charnières motorisées ou par un robot tel qu'il sera expliqué ci-dessus.

Les radiateurs 23 peuvent être accrochés derrière les panneaux solaires 22 et la charge utile 21 de manière similaire.

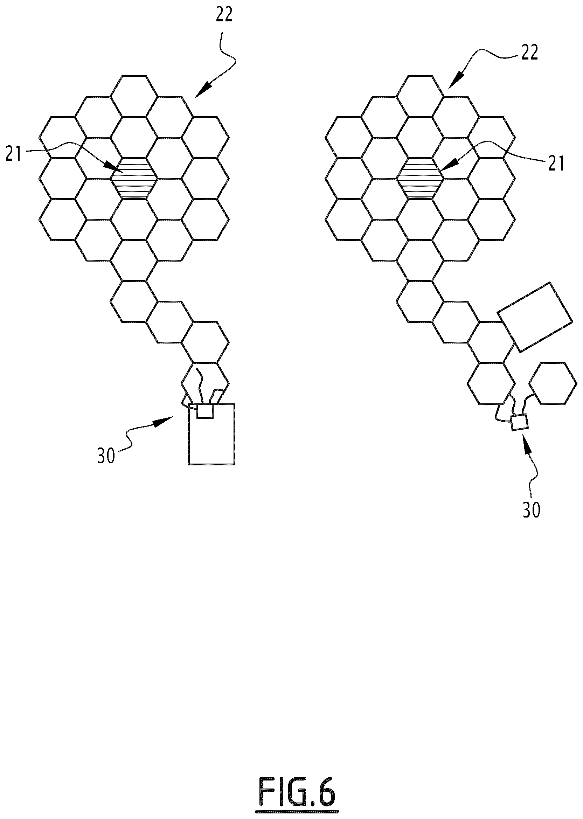

Selon un deuxième mode de réalisation du procédé de déploiement illustré sur la figure 6, un robot 30 est utilisé.

Ce robot 30 permet par exemple de déplier la pile des différents éléments constituant les modules spatiaux 20 en prenant un par un les éléments de la pile et en les positionnant de manière adaptée. Dans ce cas, l'assemblage de chaque module spatial 20 peut être effectué également en spirale en commençant cette fois par le cercle extérieur C2 et en allant vers le centre pour positionner la charge utile 21. Alternativement, le déploiement peut être commencé par la charge utile 21 et ensuite en positionnant en spirale les panneaux solaires 22 comme dans le cas précédent.

Le robot 30 peut également accrocher les différents modules spatiaux 20 entre eux ou après avoir fini l'assemblage d'un module spatial 20, procéder à l'assemblage d'un module spatial 20 adjacent.

Avantageusement, le robot 30 est configuré pour se déplacer par exemple sur une surface des différents modules spatiaux 20, par exemple sur le premier plan P1 de ces modules 20.

Pour cela, le robot 30 dispose de moyens d'accrochage à ce premier plan P1 constitués par exemple d'aimants ou de tout autre moyen disponible. Alternativement, le robot 30 utilise des rails formés par exemple par les cadres des panneaux solaires 22 pour se déplacer le long des premiers plans P1 des différents modules spatiaux 20.

En complément ou alternativement, le robot 30 présente plusieurs bras (par exemple 3 ou 4). Chaque bras comporte à son bout des pinces pour saisir des éléments structuraux. Avantageusement, le robot 30 s'alimente en électricité par le biais de ces éléments structuraux qui bénéficient de contacteurs positionnés périodiquement sur le chemin emprunté par le robot sur la plateforme 10. Les pinces du robot 30 disposent donc, en regard, de contacteurs électriques. Ainsi, dans certains exemples, le robot 30 n'a pas besoin de batteries.

Après le déploiement, le robot 30 peut être utilisé pour la maintenance de la plateforme spatiale 10 ou pour le pilotage de cette plateforme 10 comme cela sera expliqué plus en détail par la suite.

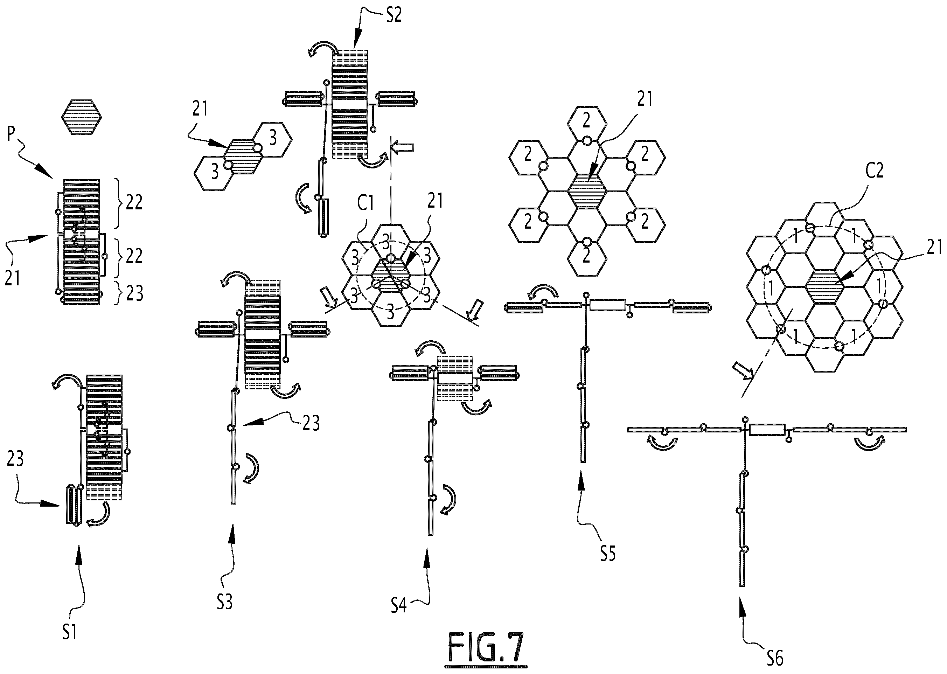

La figure 7 illustre un troisième mode de réalisation du procédé de déploiement du module spatial 20.

Selon ce mode de réalisation, la pile P formant le module spatial 20 présente un ordre d'empilement et des liaisons particuliers.

Selon ce mode de réalisation, les panneaux solaires 22 sont classés en deux groupes et chaque groupe est relié à la charge utile 21. La pile P ainsi formé comprend tout d'abord les radiateurs 23 en bas de la pile avec une liaison avec la charge utile 21, puis le premier groupe de panneaux solaires 22 raccordé également à la charge utile 21, puis la charge utile 21 elle-même et enfin, en haut de la pile P, le deuxième groupe de panneaux solaires 22 raccordé également à la charge utile 21.

Chaque groupe des panneaux solaires 22 comprend une pluralité de triplets. Chaque triplet comprend des panneaux solaires raccordés entre eux de manière consécutive et définit ainsi des panneaux solaires de 3 rangs. Les panneaux solaires de rang 3 sont raccordés directement à la charge utile 21, les panneaux solaires de rang 2 sont raccordés à ceux de rang 3 et les panneaux solaires de rang 1 sont raccordés directement à ceux de rang 2. Ces liaisons sont par exemples formées par des charnières, avantageusement motorisées.

Dans l'exemple de la figure 7, chaque groupe comprend 3 triplets des panneaux solaires 22.

Lors d'une première étape S1 du procédé de déploiement, les radiateurs 23 sont sortis de la pile en utilisant la liaison correspondante.

Ensuite, lors d'une deuxième étape S2 du procédé, les radiateurs 23 sont partiellement ouverts et un premier couple de triplets issus des groupes différents sont ouverts de part et d'autre de la charge utile 21.

Puis, lors d'une troisième étape S3, les radiateurs 23 sont ouverts complètement et un deuxième couple triplets issus des groupes différents sont ouverts de part et d'autre de la charge utile 21.

Ensuite, lors de la quatrième étape S4, un troisième couple de triplets issus des groupes différents sont ouverts de part et d'autre de la charge utile 21.

Ainsi, à l'issue de cette étape, les panneaux solaires 22 de rang 3 forment le premier cercle C1 autour de la charge utile 21.

Lors d'une cinquième étape S5, chaque triplet est déplié partiellement en positionnant ainsi les panneaux solaires de rang 2 de manière adjacente à ceux de rang 3.

Enfin, lors d'une sixième étape S6 de ce procédé, chaque triplet est déplié complétement en positionnant ainsi les panneaux solaires de rang 1 de manière adjacente à ceux de rang 3 et de rang 2.

Ainsi, le deuxième cercle C2 constitué de panneaux solaires de rangs 1 et 2 est fermé.

Bien entendu, lors de ce procédé de déploiement, le déploiement des radiateurs 23 et des panneaux solaires 22 peut être exécuté de manière indépendante.

En outre, dans certains exemples de réalisation du procédé de déploiement, différents modules spatiaux 20 peuvent être déployés de manière indépendante. Dans un tel cas, le procédé comprend également une étape de raccordement de différents modules entre eux. Pour cela, le robot 30 tel que défini précédemment peut être utilisé.

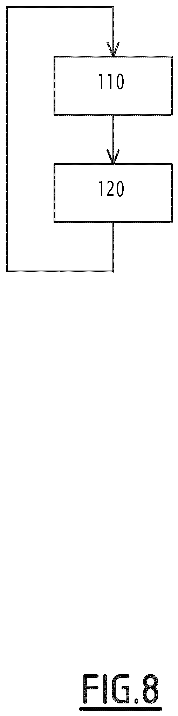

Un procédé de pilotage de la plateforme spatiale 10 sera désormais expliqué en référence à la figure 8 présentant un organigramme de ses étapes.

En particulier, ce procédé comprend une phase de contrôle actif de l'attitude de la plateforme spatiale 10 et une phase de contrôle passif de son attitude.

La phase de contrôle actif est par exemple mise en œuvre par un système de pilotage 40.

Ce système de pilotage 40 présente par exemple une composante électronique embarquée dans la plateforme 10. Par exemple, ce système de pilotage 40 fait partie de l'une des charges utiles 21 des modules spatiaux 20 constituant la plateforme spatiale 10.

Alternativement, le système de pilotage 40 est distant. Il est par exemple mis en œuvre dans une station terrestre ou toute autre station distante, et les commandes correspondantes sont transmises à la plateforme spatiale 10 en utilisant des moyens de communication connus en soi.

La phase de contrôle actif de l'attitude de la plateforme spatiale 10 comprend une première étape 110 de déplacement d'une masse sur une surface de contrôle de la plateforme spatiale 10.

Avantageusement, la surface de contrôle est formée du plan utile PU de cette plateforme, tel qu'expliqué précédemment.

La masse est par exemple formée par le robot 30 tel qu'expliqué précédemment. Ce robot 30 est apte alors à se déplacer le long du plan utile PU de la plateforme spatiale et ainsi modifier la distribution de masses sur cette plateforme spatiale 10. Ce déplacement crée un couple de contrôle en positionnant activement le centre de masse par rapport au point d'application des forces (essentiellement issues du flux solaire).

Dans certains exemples, la masse peut être formée ou comprendre des éléments déplaçables par un système de poulies, ou un fluide déplaçable par un système fluidique. Dans ces cas, un tel système peut être complémentaire au robot 30.

Par ailleurs, dans certains cas, le robot 30 peut aussi être configuré pour, en cas de besoin, déplacer des panneaux solaires périphériques 22 pour créer des couples plus importants, notamment en cas de réparations qui le mobiliseraient et/ou lui empêcheraient de créer un couple de contrôle.

Selon différents modes de réalisation de l'invention, le robot 30 peut être utilisé uniquement pour le pilotage de la plateforme spatiale ou en complément de ce pilotage, pour la maintenance et/ou le déploiement de la plateforme 10, comme cela a été expliqué précédemment.

Avantageusement, le contrôle actif de l'attitude s'effectue par rapport à un seul axe. Par exemple, le contrôle actif de l'attitude s'effectue uniquement en lacet, grâce notamment à la structure en I de la plateforme 10.

Ainsi, le système de pilotage 40 peut mesurer la rotation de la plateforme spatiale selon ledit axe et compenser cette rotation en lacet par le déplacement du robot 30 sur le plan utile PU de la plateforme spatiale 10.

Dans certains modes de réalisation, la phase de contrôle actif de l'attitude de la plateforme spatiale 10 peut également comprendre une deuxième étape 120 qui comprend l'actionnement d'un ou de plusieurs actionneurs ou propulseurs disposés sur la plateforme spatiale 10.

Préalablement à la mise en œuvre de cette étape 120, le module de pilotage 40 peut également actionner le robot 30 pour déplacer de manière appropriée un ou plusieurs actionneurs/propulseurs par exemple dans le plan utile PU de la plateforme spatiale 10. Puis, le système de pilotage 40 peut déterminer une valeur de propulsion nécessaire pour chaque actionneur/propulseur en fonction de son positionnement vis-à-vis de la plateforme spatiale 10.

La phase de contrôle passif de l'attitude de la plateforme spatiale 10 s'effectue de manière inhérente grâce au gradient gravitationnel local du potentiel de la Terre.

En particulier, ce contrôle passif de l'attitude comprend un contrôle en tangage et en roulis de la plateforme spatiale 10. Autrement dit, la plateforme spatiale 10 présente une stabilité naturelle en tangage et en roulis.

Bien entendu, le procédé de pilotage peut comprendre un contrôle actif complémentaire en attitude selon deux ou trois axes.

Pour cela, un ou plusieurs robots peuvent être utilisés simultanément pour se déplacer dans différents plans de la plateforme spatiale 10.

On conçoit alors que la présente invention présente un certain nombre d'avantages.

Tout d'abord, l'invention présente une optimisation de l'encombrement dans la coiffe du lanceur. Ceci est atteint par la forme particulière des éléments constituant la plateforme spatiale et notamment les modules spatiaux formant cette plateforme. Cette forme est identique pour tous les éléments et présente également les mêmes dimensions dans leurs plans d'extension respectifs. Ainsi, un seul lanceur lourd peut emporter l'ensemble des éléments nécessaires pour déployer la plateforme spatiale.

L'invention permet également d'atteindre une optimisation de la masse de la plateforme spatiale.

En particulier, la plateforme spatiale ne nécessite pas de batterie pour son fonctionnement car les panneaux solaires pointent de manière permanente vers le Soleil grâce à une orbite particulière.

En outre, les panneaux solaires sont particulièrement légers compte tenu du choix particulier de matériaux les constituant et de l'architecture en voile tendu par un cadre.

En outre, l'utilisation d'une pompe à chaleur permet de dissiper les calories générées par la charge utile. Cette solution minimise la surface de refroidissement requise par les radiateurs. Ainsi, le nombre de radiateurs peut être réduit tout en assurant le refroidissement nécessaire de la charge utile.

De plus, les radiateurs sont disposés de manière optimisée à l'ombre des panneaux solaires et sont très peu exposés au flux infrarouge terrestre. Les radiateurs peuvent ainsi fonctionner dans des conditions optimales et leur surface peut donc être minimisée.

Enfin, les efforts structuraux de flexion induits par le vent solaire sont minimisés grâce à une répartition de la charge alaire sur toute la surface exposée au Soleil de cette large plateforme. Ceci minimise alors la masse de renforts structuraux entre les différents modules spatiaux constituant la plateforme spatiale.

L'invention permet également de minimiser les différents types de pertes.

En particulier, la plateforme spatiale selon l'invention est constituée de modules tous identiques, autosuffisants en puissance et en dissipation. En outre, les dimensions de chaque module sont optimales pour minimiser les pertes en puissance électrique et thermique.

L'invention propose également différentes options de déploiement. Ces options comprennent par exemple un déploiement des éléments constituant chaque module spatial grâce à l'utilisation de charnières motorisées. Une autre option est proposée par l'utilisation d'un robot indigène. Enfin, une autre option de déploiement est proposée par assemblage des éléments hexagonaux individuellement.

L'invention présente également des avantages internes de modularité et d'extensibilité.

En particulier, les différents modules spatiaux peuvent être rajoutés a posteriori pour augmenter la taille de la plateforme.

En outre, le pilotage de la plateforme peut être effectué d'une manière particulièrement simple. En particulier, la stabilité selon au moins deux axes est assurée par le gradient de gravité de la Terre.

Cela permet d'avoir un gain en masse des actionneurs/propulseurs nécessaires pour le contrôle et évite leur consommation en ergol.

En outre, l'invention propose un contrôle actif en lacet par ajustement du centre de masse par rapport au centre de pression solaire. Ainsi, une masse mobile telle qu'un robot indigène ajuste sa position pour générer ou neutraliser des couples en ajustant les distances entre le centre de masse et le point résultant d'application des forces de pression de radiation solaire.

## Revendications

1. Plateforme spatiale (10) formée d'une pluralité de modules spatiaux (20) identiques assemblés entre eux pour former une structure allongée selon un axe de plateforme (X), ladite structure présentant une distribution de masses sensiblement homogène suivant l'axe de plateforme (X).

2. Plateforme (10) selon la revendication 1, dans laquelle chaque module spatial (20) comprend une charge utile (21) et est autosuffisant en énergie et en dissipation de la chaleur.

3. Plateforme (10) selon la revendication 1 ou 2, dans laquelle chaque module (20) est déployable indépendamment des autres modules (20).

4. Plateforme (10) selon l'une quelconque des revendications précédentes, dans laquelle chaque module (20) comprend une pluralité de panneaux solaires (22) formant un premier plan (P1) du module (20) correspondant ;
les modules (20) étant assemblés de sorte que leur premiers plans (P1) forment un plan utile (PU) de la plateforme (10).

5. Plateforme (10) selon la revendication 4, destinée à être mise sur une orbite de sorte que son plan utile (PU) est orienté en permanence vers le Soleil.

6. Plateforme (10) selon l'une quelconque des revendications précédentes, destinée à être mise sur une orbite de sorte que l'axe de plateforme (X) est orienté avec le nadir de la Terre.

7. Plateforme (10) selon l'une quelconque des revendications précédentes, présentant une structure en « I ».

8. Plateforme (10) selon l'une quelconque des revendications précédentes, comprenant en outre un robot (30) apte à se déplacer sur une surface de la plateforme (10) et configuré pour déployer des éléments (21, 22, 23) formant chaque module (20) et/ou pour effectuer des opérations de maintenance de la plateforme (10).

9. Plateforme (10) selon l'une quelconque des revendications précédentes, comprenant en outre une masse (30) apte à se déplacer sur une surface de la plateforme (10) et configurée pour contrôler l'attitude de la plateforme (10) selon au moins un axe.

10. Plateforme (10) selon la revendication 9, dans laquelle ladite masse (30) est configurée pour contrôler l'attitude de la plateforme au moins en lacet.

11. Plateforme (10) selon la revendication 9 ou 10, dans laquelle ladite masse (30) est un robot (30).

12. Plateforme (10) selon l'une quelconque des revendications précédentes, comprenant au moins un actionneur/propulseur fixe ou déplaçable par un robot (30).

13. Plateforme (10) selon l'une quelconque des revendications précédentes, dans laquelle ladite structure présente une distribution de masses sensiblement homogène dans un plan utile (PU) formé de l'axe de plateforme (X) et d'un axe perpendiculaire à cet axe de plateforme (X).

14. Procédé de déploiement de la plateforme (10) selon l'une quelconque des revendications précédentes, comprenant les étapes suivantes :
- déploiement de chaque module spatial (20) constituant la plateforme (10) ;
- assemblage des modules spatiaux (20) entre eux.
